Europäisches Patentamt

European Patent Office

Office européen des brevets

(11) Veröffentlichungsnummer: **0 289 606 B1**

## (12) EUROPÄISCHE PATENTSCHRIFT

(45) Veröffentlichungstag der Patentschrift: **01.07.92**

(21) Anmeldenummer: **87900983.5**

(22) Anmeldetag: **10.11.86**

(86) Internationale Anmeldenummer:
**PCT/SU86/00114**

(87) Internationale Veröffentlichungsnummer:
**WO 88/03612 (19.05.88 88/11)**

(51) Int. Cl.⁵: **F16C 33/10**

(54) **SCHMIERVORRICHTUNG FÜR WENIGSTENS EIN HYDRODYNAMISCHES LAGER.**

(43) Veröffentlichungstag der Anmeldung:
**09.11.88 Bulletin 88/45**

(45) Bekanntmachung des Hinweises auf die
Patenterteilung:
**01.07.92 Bulletin 92/27**

(84) Benannte Vertragsstaaten:
**DE FR GB IT SE**

(56) Entgegenhaltungen:
**CH-A- 425 362    SU-A- 587 276
US-A- 2 158 835    US-A- 3 563 344
US-A- 4 194 796    US-A- 4 334 596**

**Spravochnoe posobie "Smazka metallorezhuschikh stankov", pod. red. V.I. Dikushina, 1956, Gosudarstvennoe nauchnoteknicheskoe irdatelsvo mashinostroitelnoi
literatury (Moscow), page 179, the fourth diagram from above**

(73) Patentinhaber: **MOSKOVSKOE NAUCHNO-
PROIZVODSTVENNOE OBIEDINENIE
'BIOFIZPRIBOR'
ul. Butyrskaya, 76
Moscow, 121015(SU)**

(72) Erfinder: **GORODISSKY, Boris Pavlovich
Leninsky pr., 154-201
Moscow, 117571(SU)**
Erfinder: **LOTTS, Jury Alexandrovich
ul. Chusovskaya, 11-6-91
Moscow, 107207(SU)**
Erfinder: **VERETENOV, Lev Nikolaevich
B.Tolmachevsky per., 4-10
Moscow, 109017(SU)**

(74) Vertreter: **Finck, Dieter et al
Patentanwälte v. Füner, Ebbinghaus, Finck
Mariahilfplatz 2 & 3
W-8000 München 90(DE)**

EP 0 289 606 B1

## Beschreibung

Die Erfindung betrifft eine Schmiervorrichtung für wenigstens ein hydrodynamisches Lager mit einem Ölbehälter und einer Pumpe, die mit dem hydrodynamischen Lager über eine Druckleitung mit einem Ventil verbunden ist, das ein Gehäuse mit einer Eintrittsöffnung und einer Austrittsöffnung sowie ein Element aufweist, das in dem Gehäuse zwischen einer ersten Stellung bei laufender Pumpe und einer zweiten Stellung bei nicht laufender Pumpe bewegbar ist.

Bei einer solchen, aus der US-A-21 58 835 bekannten Schmiervorrichtung erfolgt die Schmiermittelförderung aus einem Öl enthaltenden Behälter durch eine Pumpe, die Öl aus dem Behälter ansaugt und über eine Druckleitung zum Lager fördert. In der Druckleitung ist ein Rückschlagventil angeordnet, das ein Rückschlagelement aufweist, welches bei laufender Pumpe in einer ersten Stellung die Druckleitung freigibt, bei nicht laufender Pumpe in einer zweiten Stellung die Druckleitung verschließt, so daß kein Öl über die Pumpe in den Behälter zurückströmen kann.

Oberhalb des Rückschlagventils ist eine Abzweigleitung vorgesehen, die in den Bodenbereich des Ölbehälters mündet und mit einem innerhalb des Öls liegenden weiteren Rückschlagventil versehen ist, welches öffnet, wenn bei nicht laufender Pumpe das erste Rückschlagventil schließt, so daß Öl aus dem Behälter über die Zweigleitung und die Druckleitung in das Lager gesaugt werden kann. Dieser Aufbau erfordert eine Zweigleitung mit einem weiteren Rückschlagventil.

Die der Erfindung zugrundeliegende Aufgabe besteht deshalb darin, die gattungsgemäße Schmiervorrichtung derart auszubilden, daß bei einem geringen baulichen Aufwand eine ausreichende Versorgung der Lager mit Öl sowohl bei laufender als auch bei nicht laufender Pumpe gewährleistet ist.

Diese Aufgabe wird ausgehend von der Schmiervorrichtung der gattungsgemäßen Art dadurch gelöst, daß das Gehäuse im Ölbehälter unterhalb des Ölpegels angeordnet ist, daß das Gehäuse mindestens eine zusätzliche, mit dem Ölbehälter in Verbindung stehende Öffnung aufweist, daß das Element einen Axialkanal aufweist, über den die Eintrittsöffnung mit der Austrittsöffnung des Gehäuses in ständiger Verbindung steht, daß das Element in seiner ersten Stellung die zusätzliche Öffnung verschließt und daß das Element in seiner zweiten Stellung die zusätzliche Öffnung für die Verbindung mit der Austrittsöffnung freigibt.

Die erfindungsgemäße Schmiervorrichtung gewährleistet eine ununterbrochene Ölzufuhr zu den Lagern, ohne irgendwelche Reserve- oder Zusatzeinrichtungen auch dann, wenn Störungen im elektrischen Pumpenantrieb oder mechanische Störungen der Pumpe auftreten. Bei solchen Störungen schaltet die Schmiervorrichtung vom hydrostatischen Betriebszustand automatischen auf den hydrodynamischen Betriebszustand um.

Wenn das Element in dem Gehäuse durch eine Feder in seine zweite Stellung vorgespannt ist und ein Axialkanal als Drosselkanal ausgebildet ist, lassen sich die Bedingungen für die Erzeugung des erforderlichen Drucks optimieren und das Öl an die Lager bei laufender Pumpe nur über den Axialkanal des beweglichen Elements zuführen.

Zweckmäßigerweise ist die zusätzliche Öffnung des Gehäuses mit einem Filter versehen.

Anhand einer Zeichnung, in der schematisch eine Schmiervorrichtung mit zugeordnetem hydrodynamischen Lager teilweise geschnitten dargestellt ist, wird die Erfindung näher erläutert.

Die Schmiervorrichtung für ein hydrodynamisches Lager 8 weist eine in einem Ölbehälter 2 senkrecht angeordnete Pumpe 1 geeigneter Auslegung auf.

Die Pumpe 1 ist mit einem Filterelement 3 versehen, das in der dargestellten Ausführungsvariante koaxial zu der Pumpe 1 angeordnet ist, wobei die letztere mit dem Filterelement 3 mittels einer Rohrleitung 4 verbunden ist. Über eine Druckleitung 5 wird das Öl aus dem Behälter 2 keilförmigen Rillen 6, 7 des hydrodynamischen Lagers 8 zugeführt. Das Öl wird dem Lager 8 über eine Steuereinheit zugeführt, die in Form eines Ventils 9 ausgebildet ist, das eine Gehäuse mit einer Eintrittsöffnung 10 und einer Austrittsöffnung 11 und ein bewegliches Element 12 mit einem Axialkanal 13 besitzt, über den die Öffnungen 10 und 11 in ständiger Verbindung miteinander stehen. Im Ventil 9 ist mindestens eine zusätzliche Öffnung 14 vorgesehen.

Das bewegliche Element 12 kann zwei Stellungen einnehmen. In der ersten Stellung schließt es bei laufender Pumpe die Öffnung 14, wobei die Austrittsöffnung 11 mit der Eintrittsöffnung 10 über den Axialkanal 13 verbunden ist. In der zweiten Stellung des Elementes 12 ist beim Abschalten der Pumpe die Öffnung 11 mit dem Behälter 2 über die zusätzliche Öffnung 14 verbunden. Das bewegliche Element 12 ist in der Richtung seiner zweiten Stellung relativ zum Ventil 9 durch eine Feder 15 vorgespannt. In der dargestellten Ausführungsvariante ist der Axialkanal 13 als Drosselkanal ausgeführt.

Das Ventil 9 ist in der dargestellten Ausführungsvariante im Innern des Behälters 2 derart angeordnet, daß die zusätzliche Öffnung 14 ins Öl eingetaucht ist, das sich im Behälter 2 befindet. Dabei ist die zusätzliche Öffnung 14 mit einem Filter 16 versehen.

Als Antrieb für die Pumpe 1 kann ein beliebiger bekannter Elektromotor 17 eingesetzt werden.

Eine Welle 18 ist mit seinem Stützzapfen 19 an der Stützfläche 20 des Lagers 8 abgestützt. Durch eine vor dem Filterelement 3 angeschlossene überlaufleitung 21 kann die dem Lager 8 zugeführte Ölmenge eingestellt werden. Über Rohrleitungen 22, 23 fließt das Öl in den Behälter 2 zurück.

Beim Einschalten des Speisestroms läuft der Elektromotor 17 an, durch den die Pumpe 1 im Betrieb gesetzt wird. Durch die letztere wird das Öl über die Leitung 4 in das Filterelement 3 gefördert. Dann fließt das Öl über die Druckleitung 5 ins Ventil 9 durch seine Eintrittsöffnung 10 hindurch und erzeugt einen Druck unter dem beweglichen Element 12. Unter Einwirkung dieses Druckes wird die Feder 15 zusammengedrückt. Das bewegliche Element 12 verschiebt sich in der Richtung der Austrittsöffnung 11 und schließt sie.

Dabei tritt das Öl über den Axialkanal 13 in die Druckleitung 24 und weiter in die Rillen 6, 7 des Lagers 8 ein, wobei die Schmierung des letzteren erfolgt. Die Rückführung des Öle in den Behälter 2 erfolgt über die Rohrleitungen 22, 23. Wenn die Welle 18 zu rotieren beginnt, erzeugen die keilförmigen Rillen 6, 7 des Lagers 8 einen hydrodynamischen Effekt. Je nach dem gewählten Schmierungszustand schaltet das System vom hydrostatischen auf den hydrodynamischen Zustand und umgekehrt automatisch um. Für den Übergang auf den hydrodynamischen Schmierungszustand wird die Pumpe 1 abgeschaltet. Im Ergebnis sinkt der Öldruck im System auf einen Wert ab, der nicht ausreicht, um die Feder 15 zusammenzudrücken und folglich das bewegliche Element 12 in der ersten Stellung zu halten. Infolgedessen verschiebt sich das bewegliche Element 12 in die zweite Stellung, bei der die Austrittsöffnung 11 mit dem Behälter 2 über die zusätzliche Öffnung 14 in Verbindung gebracht wird. Dabei wird das Öl aus dem Behälter 2 in das Lager 8 über die zusätzliche Öffnung 14 angesaugt. In der dargestellten Ausführungsvariante ist die Öffnung 14 von dem Filter 16 umgeben, über den das Öl in die zusätzliche Öffnung 14 gelangt.

Die Pumpe 1 arbeitet im hydrostatischen Zustand kontinuierlich und pumpt durch das Lager 8 die erforderliche Menge von Öl hindurch, das dann über die Rohrleitungen 22, 23 in den Behälter 2 abfließt. Bei einer Störung im Stromkreis der Pumpe 1 sowie im Falle von anderen Störungen der Konstruktionselemente der Einrichtung, beispielsweise bei einem Bruch der Pumpe 1, reicht der Öldruck nicht aus, um das bewegliche Element 12 in der ersten Stellung zu halten. Es verschiebt sich unter der Einwirkung der Feder 15 und der Eigenmasse in die zweite Stellung. Im Ergebnis wird die zusätzliche Öffnung 14 frei und das Öl fließt wie oben beschrieben aus dem Behälter 2 in die Austrittsöffnung 11 und weiter über die Druckleitung 24 in die Rillen 6, 7 für eine ausreichende Schmierung des Lagers 8.

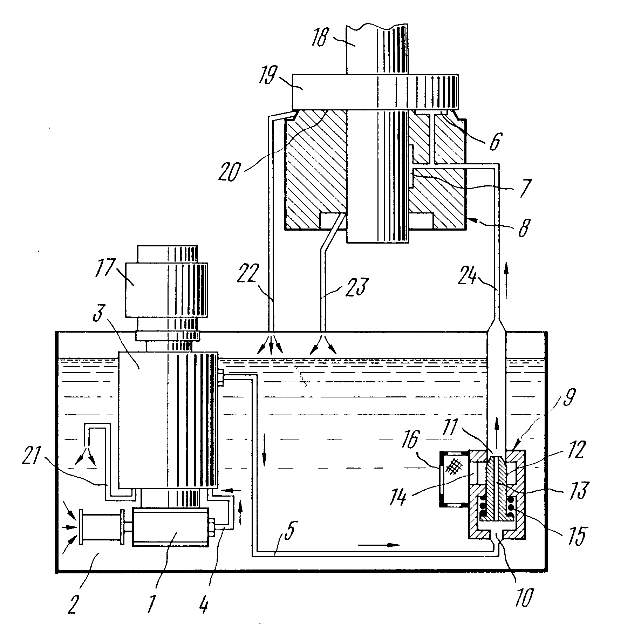

## Patentansprüche

1. Schmiervorrichtung für wenigstens ein hydrodynamisches Lager (8) mit einem Ölbehälter (2) und einer Pumpe (1), die mit dem hydrodynamischen Lager (8) über eine Druckleitung (5) mit einem Ventil (9) verbunden ist, das ein Gehäuse mit einer Eintrittsöffnung (10) und einer Austrittsöffnung (11) sowie ein Element (12) aufweist, das in dem Gehäuse zwischen einer ersten Stellung bei laufender Pumpe (1) und einer zweiten Stellung bei nicht laufender Pumpe (1) bewegbar ist,
dadurch **gekennzeichnet,**
   - daß das Gehäuse im Ölbehälter unterhalb des Ölpegels (2) angeordnet ist,
   - daß das Gehäuse mindestens eine zusätzliche, mit dem Ölbehälter (2) in Verbindung stehende Öffnung (14) aufweist,
   - daß das Element (12) einen Axialkanal (13) aufweist, über den die Eintrittsöffnung (10) mit der Austrittsöffnung (11) des Gehäuses in ständiger Verbindung steht,
   - daß das Element (12) in seiner ersten Stellung die zusätzliche Öffnung (14) verschließt und
   - daß das Element (12) in seiner zweiten Stellung die zusätzliche Öffnung für die Verbindung mit der Austrittsöffnung (11) freigibt.

2. Schmiervorrichtung nach Anspruch 1, dadurch **gekennzeichnet,** daß das Element (12) durch einer Feder (15) in seine zweite Stellung vorgespannt ist und daß sein Axialkanal (13) als Drosselkanal ausgebildet ist.

3. Schmiervorrichtung nach Anspruch 1 oder 2, dadurch **gekennzeichnet,** daß die zusätzliche Öffnung (14) des Gehäuses mit einem Filter (16) versehen ist.

## Claims

1. A lubricating device for at least one hydrodynamic bearing (8) with an oil reservoir (2) and a pump (1), this pump (1) being connected to the hydrodynamic bearing (8) via a pressure pipe (5) with a valve (9), which valve (9) has a housing with an intake opening (10) and an outlet opening (11) as well as an element (12) which is movable in the housing between a first position when the pump (1) is running and a second position when the pump (1) is not running, characterised

- in that the housing is arranged in the oil reservoir (2) beneath the oil level,
- in that the housing has at least one additional opening (14), which is connected to the oil reservoir (2),
- in that the element (12) has an axial channel (13) via which the intake opening (10) is in continuous connection with the outlet opening (11) of the housing,
- in that, in its first position, the element (12) closes the additional opening (14) and
- in that, in its second position, the element (12) releases the additional opening so that it is connected to the outlet opening (11).

2. A lubricating device according to Claim 1, characterised in that the element (12) is biased in its second position by a spring (15) and in that its axial channel (13) is formed as a throttling channel.

3. A lubricating device according to Claim 1 or 2, characterised in that the additional opening (14) of the housing is provided with a filter (16).

**Revendications**

1. Dispositif de lubrification pour au moins un roulement hydrodynamique (8) comprenant un réservoir d'huile (2) et une pompe (1) relié au roulement hydrodynamique (8), par l'intermédiaire d'un conduit de refoulement (5), avec une soupape (9), qui présente un boîtier comportant une ouverture d'entrée (10) et une ouverture de sortie (11) ainsi qu'un élément (12) pouvant être déplacé dans le boîtier entre une première position dans laquelle la pompe (1) fonctionne et une deuxième position dans laquelle la pompe (1) ne fonctionne pas,

caractérisé

- en ce que le boîtier est disposé dans le réservoir d'huile (2) en dessous du niveau d'huile,
- en ce que le boîtier présente au moins une ouverture supplémentaire (14) en liaison avec le réservoir d'huile (2),
- en ce que l'élément (12) présente un canal axial (13) par laquelle l'ouverture d'entrée (10) est en liaison permanente avec l'ouverture de sortie (11) du boîtier,
- en ce que l'élément (12), dans sa première position, obture l'ouverture supplémentaire (14), et
- en ce que l'élément (12), dans sa deuxième position, libère l'ouverture supplémentaire destinée à la liaison avec l'ouverture de sortie (11).

2. Dispositif de lubrification selon la revendication 1, caractérisé en ce que l'élément (12) est précontraint par un ressort (15) dans sa deuxième position et que son canal axial (13) est réalisée sous la forme d'un canal d'étranglement.

3. Dispositif de lubrification selon la revendication 1 ou 2, caractérisé en ce que l'ouverture supplémentaire (14) du boîtier est pourvue d'un filtre (16).